# EUROPÄISCHE PATENTSCHRIFT

(11) **EP 2 145 392 B1**
(45) Veröffentlichungstag und Bekanntmachung des Hinweises auf die Patenterteilung: **06.10.2010**
(21) Anmeldenummer: 08734615.1
(22) Anmeldetag: 14.03.2008
(51) Int. Cl.: H04B 1/00, G06F 9/445

(54) **VERFAHREN UND VORRICHTUNG ZUR DYNAMISCHEN REKONFIGURATION EINES FUNKKOMMUNIKATIONSSYSTEMS**
METHOD AND DEVICE FOR THE DYNAMIC RECONFIGURATION OF A RADIO COMMUNICATIONS SYSTEM
PROCÉDÉ ET DISPOSITIF DESTINÉS À LA RECONFIGURATION DYNAMIQUE D'UN SYSTÈME DE RADIOCOMMUNICATION

(30) Priorität: 16.05.2007 DE 102007022970
(43) Veröffentlichungstag der Anmeldung: 20.01.2010
(73) Patentinhaber: Rohde & Schwarz GmbH & Co. KG, 81671 München (DE)
(72) Erfinder: FOAG, Jürgen, 81375 München (DE)
(74) Vertreter: Körfer, Thomas
(86) Internationale Anmeldenummer: PCT/EP2008/002065
(87) Internationale Veröffentlichungsnummer: WO 2008/138420

(56) Entgegenhaltungen:
- EP-A- 1 551 107
- US-A1- 2003 081 580
- US-A1- 2004 190 553
- US-A1- 2004 242 261
- US-A1- 2006 073 804
- US-A1- 2006 199 550

## Beschreibung

Die Erfindung betrifft ein Verfahren und eine Vorrichtung zur dynamischen Rekonfiguration eines Funkkommunikationssystems.

Herkömmlich werden in Funkkommunikationssystemen sämtliche Funktionseinheiten, die in der Verarbeitung der Signale benötigt werden eigenständig aufgebaut und zu dem Gesamtsystem verbunden. Zur Reduzierung des Aufwands des Geräte-Aufbaus, des Geräte-Volumens und der Kosten wird in der US 2006/00073804 A1 eine Vorrichtung vorgeschlagen, welche Funktionsblöcke eines Funkkommunikationssystems, welche in verschiedenen Betriebszuständen in unterschiedlicher Verschaltung benötigt werden, beim Wechsel des Betriebszustands rekonfiguriert. Unter Rekonfiguration ist in US 2006/00073804 A1 ausschließlich die Umschaltung der Verarbeitungsrichtung von Daten im System zu verstehen, nicht jedoch ein Austausch von unterschiedlichen Funktionsblöcken. Dadurch wird ein mehrfacher Aufbau identischer Funktionsblöcke vermieden. Der Aufbau erfolgt dabei auf einem FPGA (Field Programable Gate Array), d.h. einem feldprogrammierbaren Gatterfeld. Ein Nachteil dieser Lösung ist, dass identische Funktionsblöcke, welche in unterschiedlichen Betriebszuständen in unterschiedlichen Konfigurationen benötigt werden, lediglich einen geringen Teil des Aufbaus eines typischen Funkkommunikationssystems ausmachen. Ein weiterer Nachteil ist, dass Funktionen, die andere Funktionsblöcke erforderlich machen, nicht vorhanden sind und somit nicht ausgeführt werden können.

Somit können der Aufwand des Geräte-Aufbaus, das Geräte-Volumen und die Kosten lediglich um einen geringen Anteil gesenkt werden.

Der Erfindung liegt die Aufgabe zu Grunde, ein Funkkommunikationssystem und ein Verfahren zum Betrieb eines Funkkommunikationssystems zu schaffen, welches bei geringem Aufwand des Geräte-Aufbaus ein geringes Geräte-Volumen aufweist, geringe Kosten verursacht und gleichzeitig möglichst unterschiedliche Wellenformen unterstützt.

Die Aufgabe wird erfindungsgemäß für die Vorrichtung durch die Merkmale des unabhängigen Anspruchs 1 und für das Verfahren durch die Merkmale des unabhängigen Anspruchs 8 gelöst. Vorteilhafte Weiterbildungen sind Gegenstand der hierauf rückbezogenen Unteransprüche.

Ein Funkkommunikationssystem ist mit einer Verarbeitungsschaltung ausgestattet. Die Verarbeitungsschaltung verarbeitet sowohl Empfangs-Signale wie auch Sende-Signale. Teil der Verarbeitungsschaltung ist eine freiprogrammierbare Logikschaltung. Durch Veränderung ihrer Programmierung wird sie an unterschiedliche Betriebszustände angepasst. Der Sende-Betrieb und der Empfangs-Betrieb zeichnen sich dabei durch eine unterschiedliche Programmierung der freiprogrammierbaren Logikschaltung aus. Dabei werden Funktionsblöcke aus der freiprogrammierbaren Logikschaltung sowohl ausgeladen (exportiert) als auch eingeladen (importiert).

Die Umprogrammierung erfolgt dabei vorzugsweise zur Laufzeit des Funkkommunikationssystems. Durch die Realisierung zumindest eines Teils der Verarbeitungsschaltung als programmierbare Logikschaltung wird eine sehr große Flexibilität des möglichen Schaltungsaufbaus erzielt. Dies führt außerdem zu geringem Aufwand des Geräte-Aufbaus, einem geringen Geräte-Volumen, und zu geringen Kosten.

Eine vorteilhafte Ausbildung der programmierbaren Logikschaltung durch ein FPGA sorgt für eine hohe Verarbeitungsgeschwindigkeit bei gleichzeitig geringen Kosten. Die vorteilhafte Gliederung der Umprogrammierung der freiprogrammierbaren Logikschaltung in Teilbereiche bewirkt eine hohe Verarbeitungsgeschwindigkeit, da die Verarbeitung in weiten Teilen der freiprogrammierbaren Logikschaltung fortgesetzt wird, während ein Teilbereich umprogrammiert wird. Weiterhin wird die Konsistenz der Signale sichergestellt, da eine Umprogrammierung der freiprogrammierbaren Logikschaltung lediglich in gerade nicht genutzten Bereichen erfolgt, und somit keine Signale fehlerhaft beeinflusst werden können.

Durch die vorteilhafte Möglichkeit des mehrfachen Durchlaufens einzelner Teilbereiche der freiprogrammierbaren Logikschaltung durch die Signale bzw. Signalabschnitte können der Aufwand des Schaltungs-Aufbaus und damit die Größe und die Kosten weiter reduziert werden. Ein vorteilhafter Einsatz zur Verarbeitung unterschiedlicher Wellenformen erlaubt zusätzlich eine sehr große Flexibilität der Anwendung des Funkkommunikationssystems ohne den Aufwand der Vorhaltung einer Verarbeitungsschaltung für jegliche denkbare Kommunikationsaufgabe.

Durch eine vorteilhafte Markierung der bereits durchlaufenen Bereiche der freiprogrammierbaren Logikschaltung kann die Rekonfiguration bereits in diesen Bereichen beginnen, während andere Bereiche der freiprogrammierbaren Logikschaltung noch mit der Verarbeitung beschäftigt sind. Dies erhöht die Verarbeitungsgeschwindigkeit der Verarbeitungsschaltung durch Reduktion der zur Rekonfiguration benötigten Zeit.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: eine Übersicht des Aufbaus eines beispielhaften erfindungsgemäßen Funkkommunikationssystems;
- Fig. 2: einen beispielhaften Aufbau einer erfindungsgemäßen Verarbeitungsschaltung;
- Fig. 3: ein Blockdiagramm der inneren Verschaltung eines beispielhaften FPGA bei Empfangsbetrieb;
- Fig. 4: ein Blockdiagramm der inneren Verschaltung eines beispielhaften FPGA bei Sendebetrieb;
- Fig. 5: ein Blockdiagramm der inneren Verschaltung eines beispielhaften FPGA zu Beginn der Umprogrammierung vom Empfangsbetrieb zum Sendebetrieb;
- Fig. 6: ein Blockdiagramm der inneren Verschaltung eines beispielhaften FPGA zum Ende der Umprogrammierung vom Empfangsbetrieb zum Sendebetrieb;
- Fig. 7: ein Blockdiagramm der inneren Verschaltung eines beispielhaften FPGA generischer Funktion bei der Bearbeitung eines Signalabschnitts und
- Fig. 8: ein Blockdiagramm der inneren Verschaltung eines beispielhaften FPGA generischer Funktion nach der Umprogrammierung zur mehrfachen Nutzung einzelner Teilbereiche.

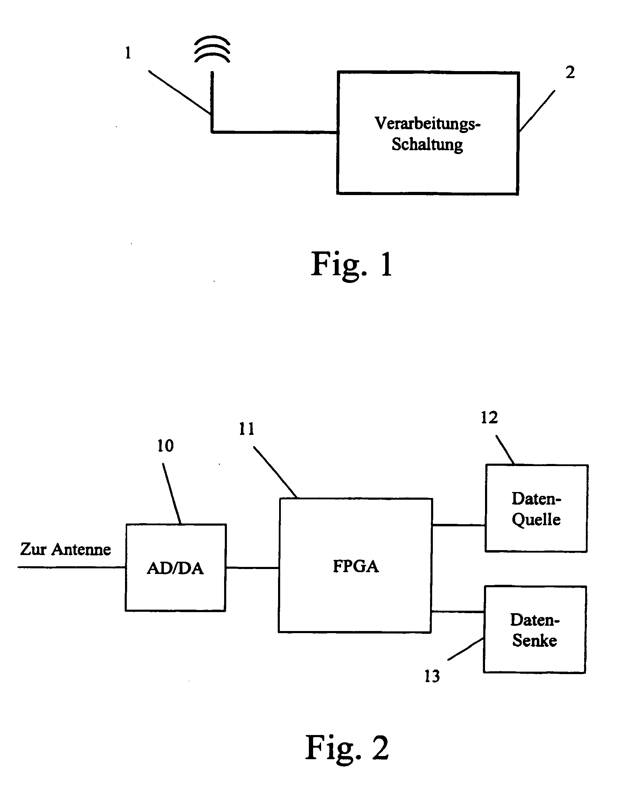

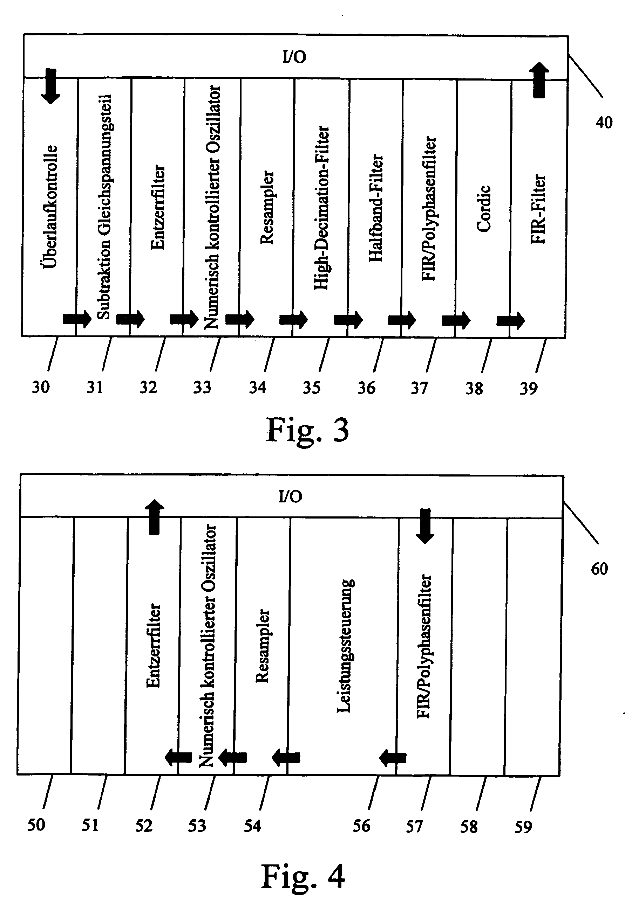

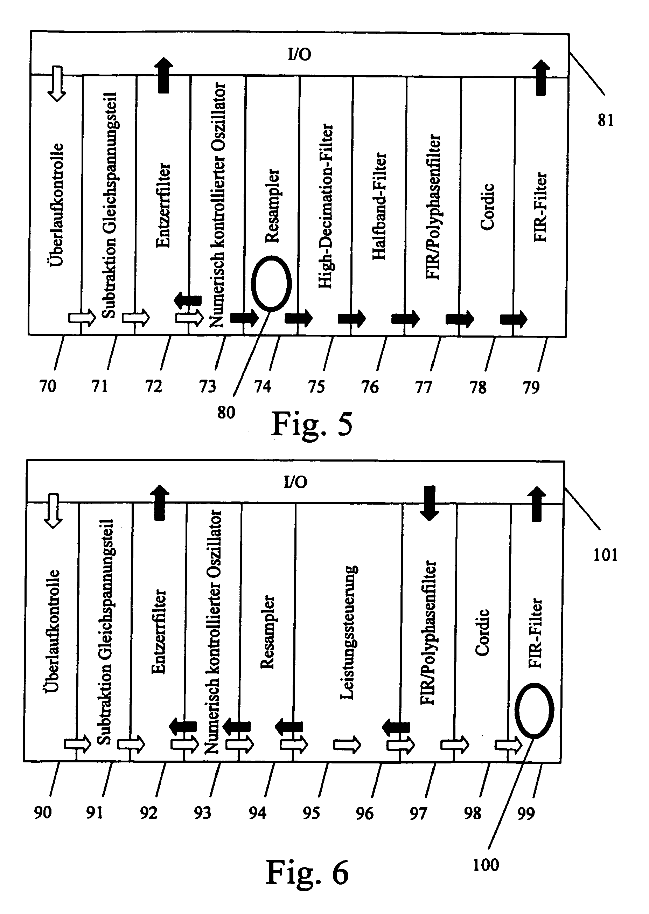

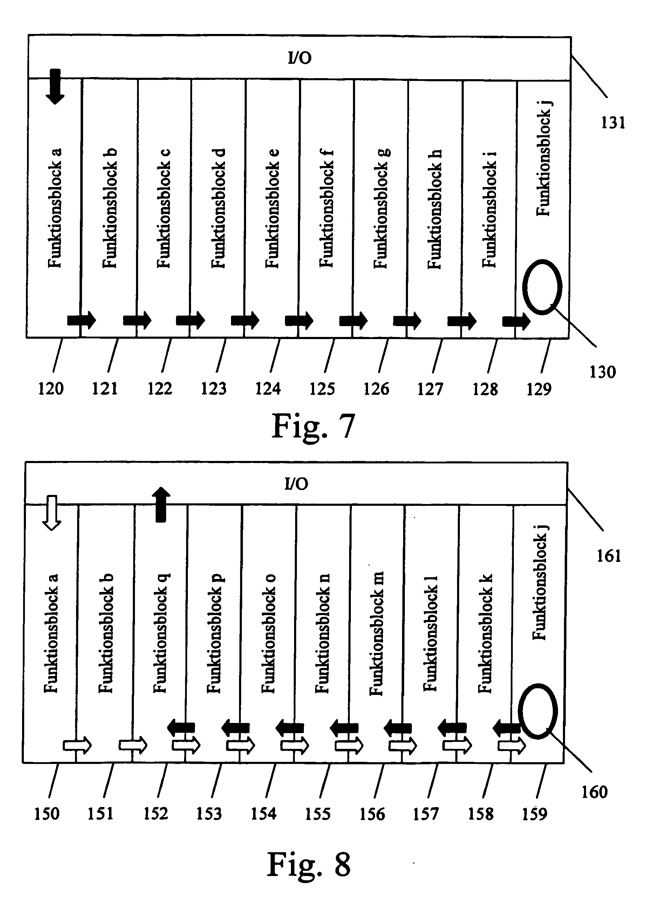

Zunächst wird anhand der Figuren 1 und 2 der Aufbau und die generelle Funktionsweise des Funkkommunikationssystems erläutert. Mittels Figuren 3 und 4 wird allgemein die Funktion der Umprogrammierung gezeigt. Anhand der Figuren 5 und 6 wird die blockweise Umprogrammierung verdeutlicht. Die Figuren 7 und 8 zeigen die mehrfache Nutzung einzelner Bereiche der Verarbeitungsschaltung zur Durchführung unterschiedlicher Operationen. Identische Elemente wurden in ähnlichen Abbildungen zum Teil nicht wiederholt dargestellt und beschrieben.

Fig. 1 zeigt eine Übersicht des Aufbaus eines beispielhaften erfindungsgemäßen Funkkommunikationssystems. Eine Antenne 1 ist mit einer Verarbeitungsschaltung 2 verbunden. Die Verarbeitungsschaltung verarbeitet sowohl ausgehende, wie auch eingehende Signale.

In Fig. 2 wird ein beispielhafter Aufbau einer erfindungsgemäßen Verarbeitungsschaltung gezeigt. Ein Analog-Digital/Digital-Analog-Wandler 10 ist mit einem FPGA 11 verbunden. Das FPGA 11 ist mit einer Daten-Quelle 12 und mit einer Daten-Senke 13 verbunden. Der Analog-Digital/Digital-Analog-Wandler 10 nimmt empfangene Signale von der Antenne 1 entgegen, digitalisiert diese, und leitet sie an das FPGA 11 weiter. Das FPGA 11 demoduliert und decodiert die Signale und führt gegebenenfalls weitere Operationen durch. Die empfangenen Daten werden an die Daten-Senke 13 weitergeleitet. Die Daten-Quelle 12 erzeugt Daten, welche zum Senden bestimmt sind. Die Daten werden an das FPGA 11 übermittelt. Das FPGA 11 codiert und moduliert die Daten zu einem Signal. Gegebenenfalls werden weitere Operationen von dem FPGA 11 durchgeführt. Das noch immer in digitaler Form vorliegende Signal wird an den Analog-Digital/Digital-Analog-Wandler 10 übertragen, von diesem in ein analoges Signal umgewandelt und an die Antenne 1 weitergeleitet.

Fig. 3 zeigt ein Blockdiagramm der inneren Verschaltung eines beispielhaften FPGA bei Empfangsbetrieb. Über einen I/O-Bereich 40 werden die Signale empfangen. Die empfangenen Signale durchlaufen nacheinander die Funktionsblöcke Überlaufkontrolle 30, Subtraktion Gleichspannungsanteil 31, Entzerrfilter 32, numerisch kontrollierter Oszillator 33 (NCO), Resampler 34, High-Decimation-Filter 35 (Dezimierungsfilter), Halfband-Filter 36 (Halbbandfilter), FIR/Polyphasen-Filter 37, Cordic 38 (Implementierung des Cordic-Algorithmus zur Bestimmung von Amplitude und Phase) und FIR-Filter 39. Über den I/O-Bereich 40 werden die ermittelten Daten weitergeleitet.

In Fig. 4 wird ein Blockdiagramm der inneren Verschaltung eines beispielhaften FPGA im Sendebetrieb dargestellt. Die zum Senden bestimmten Daten werden von einem I/O-Bereich 60 entgegengenommen. Sie durchlaufen nacheinander die Funktionsblöcke FIR/Polyphasen-Filter 57, Leistungssteuerung 56, Resampler 54, numerisch kontrollierter Oszillator 53 (NCO) und Entzerrer 52, und werden dann in ein analoges Signal umgeformt. Deutlich sichtbar ist, dass im Sendebetrieb nicht sämtliche Bereiche des FPGA genutzt werden, da der Sendebetrieb einen geringeren Aufwand erfordert als der Empfangsbetrieb. Die Funktionsblöcke 50, 51, 58 und 59 bleiben ungenutzt. Gegenüber dem Empfangsbetrieb wurde die Position und Richtung der Schnittstelle der Funktionsblöcke zum I/O-Bereich 60, wie auch die Reihenfolge der Funktionsblöcke verändert. Weiterhin wurden die Funktionsblöcke High-Decimation-Filter 35 und Halfband-Filter 36 durch eine Leistungssteuerung 56 ersetzt.

Fig. 5 zeigt ein Blockdiagramm der inneren Verschaltung eines beispielhaften FPGA zu Beginn der Umprogrammierung vom Empfangs-Betrieb zum Sende-Betrieb. Wie zu Fig. 3 beschrieben, wird ein Signalabschnitt 80 von einem I/O-Bereich 81 entgegengenommen. Von dort aus durchläuft der Signalabschnitt 80 die Blöcke in der bei Fig. 3 beschriebenen Reihenfolge. Nicht geschwärzte Pfeile stellen dabei die ursprüngliche Verschaltung der Funktionsblöcke dar. Geschwärzte Pfeile stellen dabei die aktuelle Verschaltung der Funktionsblöcke dar. In Fig. 5 hat der Signalabschnitt 80 bereits die Funktionsblöcke Überlaufkontrolle 70, Subtraktion Gleichspannungsanteil 71, Entzerrfilter 72 und numerisch kontrollierter Oszillator 73 durchlaufen. Der Signalabschnitt 80 wird gegenwärtig in dem Funktionsblock Resampler 74 verarbeitet.

Da die Umprogrammierung des FPGA blockweise erfolgt, können Funktionsblöcke, die von dem Signalabschnitt bereits durchlaufen sind, bereits an den neuen Betriebszustand angepasst werden. So wurde die Verschaltung der Funktionsblöcke Numerisch kontrollierter Oszillator 73 und Entzerrfilter 72 bereits umgestellt. Ebenso wurde die Verbindung des Funktionsblocks Entzerrfilter 72 zu dem I/O-Bereich 81 hergestellt. Die nicht mehr benötigten Funktionsblöcke Überlaufkontrolle 70 und Subtraktion Gleichspannungsanteil 71 wurden zur Reduktion des Umprogrammieraufwands belassen, wobei sie nicht mehr Teil des Signalflusses sind. Alternativ kann der so frei gewordene Raum zur Implementierung zusätzlicher Funktionen des Sendebetriebs genutzt werden.

In Fig. 6 wird ein Blockdiagramm der inneren Verschaltung eines beispielhaften FPGA zum Ende der Umprogrammierung vom Empfangs-Betrieb zum Sende-Betrieb dargestellt. Wie bei Fig. 5 beschrieben hat der Signalabschnitt 100 zu diesem Zeitpunkt bereits die Funktionsblöcke Überlaufkontrolle 70, Subtraktion Gleichspannungsanteil 71, Entzerrfilter 72, numerisch kontrollierter Oszillator 73, Resampler 74, High-Decimation-Filter 75, Halfband-Filter 76, FIR/Polyphasen-Filter 77 und Cordic 78 aus Fig. 5 durchlaufen. Gegenwärtig wird der Signalabschnitt 100 von dem Funktionsblock FIR-Filter 99 verarbeitet. Deutlich zu erkennen ist, dass die Funktionsblöcke High-Decimation-Filter 75 und Halfband-Filter 76 durch den neuen Funktionsblock Leistungssteuerung 96 ersetzt wurden. Dieser Funktionsblock wurde in dem identischen Bereich des FPGA realisiert, in welchem zuvor die Filter 75 und 76 realisiert waren. Wie zu Fig. 5 beschrieben, erfolgt die Umprogrammierung des FPGA Blockweise.

Da der Signalabschnitt 100 bereits den größten Teil der Funktionsblöcke des Empfangsbetriebs durchlaufen hat, wurde der größte Teil der Funktionsblöcke bereits auf den Sendebetrieb umgestellt. So wurde die Verschaltung der Funktionsblöcke Entzerrfilter 92, numerisch kontrollierter Oszillator 93 und Resampler 94 bereits umgestellt. Weiterhin wurde die Verbindung der Funktionsblöcke Entzerrfilter 92 und FIR/Polyphasen-Filter 97 zu dem I/O-Bereich 101 hergestellt. Die Funktionsblöcke High-Decimation-Filter 75 und Halfband-Filter 76 wurden durch den Funktionsblock Leistungssteuerung 96 ersetzt. Auch die Verbindung der Funktionsblöcke FIR/Polyphasen-Filter 97, Leistungssteuerung 96 und Resampler 94 wurde umgestellt. Die nicht mehr benötigten Funktionsblöcke Überlaufkontrolle 90, Subtraktion Gleichspannungsanteil 91 und Cordic 98 wurden zur Reduktion des Umprogrammieraufwands belassen, sind jedoch nicht mehr Teil des Signalflusses. Alternativ könnten die frei gewordenen Bereiche zur Implementierung zusätzlicher Funktionen genutzt werden. Während der Signalabschnitt 100 noch die Funktionsblöcke Cordic 98 und FIR-Filter 99 durchläuft, könnte der Sendebetrieb bereits aufgenommen werden, da alle hierfür notwendigen Funktionsblöcke betriebsbereit sind.

In Fig. 5 und Fig. 6 wurden zwei Betriebsarten der Verarbeitungsschaltung 2 dargestellt, welche jeweils für sich ohne Veränderung der Struktur der Verarbeitungsschaltung betrieben werden können. Dies ist möglich, da die benötigten Funktionsblöcke einer Betriebsart vollständig in dem FPGA untergebracht werden können. Anhand Fig. 7 und Fig. 8 wird im Folgenden eine Betriebsart dargestellt, die eine größere Anzahl an Funktionsblöcke benötigt, als gleichzeitig auf dem FPGA untergebracht werden können. Folglich ist eine datenhaltige Umprogrammierung während des Betriebs notwendig.

Fig. 7 zeigt ein Blockdiagramm der inneren Verschaltung eines beispielhaften FPGA generischer Funktion bei der Bearbeitung eines Signalabschnitts 130. Der Signalabschnitt 130 hat bereits die Funktionsblöcke a 120 bis i 128 durchlaufen. Gegenwärtig wird der Signalabschnitt 130 von dem Funktionsblock j 129 verarbeitet. Zur weiteren Verarbeitung ist eine Umprogrammierung des FPGA notwendig. Der weitere Ablauf wird in Fig. 8 dargestellt.

In Fig. 8 ist ein Blockdiagramm der inneren Verschaltung eines beispielhaften FPGA generischer Funktion nach der Umprogrammierung zur mehrfachen Nutzung einzelner Teilbereiche gezeigt. Der Signalabschnitt 160 hat bereits die Funktionsblöcke a 120 bis i 128 aus Fig. 7 durchlaufen und wird gegenwärtig von dem Funktionsblock j 159 verarbeitet. Nach der Umprogrammierung des FPGA wurden die Funktionsblöcke c 122 bis i 128 durch die neuen Funktionsblöcke k 158 bis q 152 ersetzt. Eine Verbindung des Funktionsblocks q 152 zu dem I/O-Bereich 160 wurde ebenfalls hergestellt. Der Signalabschnitt 160 wird nun von dem Funktionsblock j 159 an den Funktionsblock k 158 weitergeleitet und von diesem und den folgenden Funktionsblöcken 1 157 bis q 152 verarbeitet und über den I/O-Bereich ausgegeben. Somit wurde eine Operation durch das FPGA durchgeführt, welche nicht als Ganzes in dem FPGA untergebracht werden könnte.

Erst eine blockweise datenhaltige Umprogrammierung im Betrieb ermöglicht die Durchführung dieser aufwändigen Operation. Genügt eine einmalige Umprogrammierung der Teilbereiche des FPGA nicht, so kann der Vorgang beliebig oft wiederholt und damit ein jeder Teilbereich des FPGA beliebig oft durch unterschiedliche Funktionsblöcke genutzt werden.

Die Erfindung ist nicht auf das dargestellte Ausführungsbeispiel beschränkt. Wie bereits erwähnt, können beispielsweise unterschiedliche Funktionsblöcke durch die Verarbeitungsschaltung abgebildet werden. Auch eine Nutzung einzelner Teilbereiche durch mehr als zwei Verarbeitungsschritte ist möglich. Alle vorstehend beschriebenen Merkmale oder in den Figuren gezeigten Merkmale sind im Rahmen der Erfindung beliebig miteinander kombinierbar.

## Patentansprüche

1. Funkkommunikationssystem mit einer Verarbeitungsschaltung (2),
wobei die Verarbeitungsschaltung (2) Empfangs-Signale und Sende-Signale verarbeitet,
wobei die Verarbeitungsschaltung (2) eine freiprogrammierbare Logikschaltung beinhaltet,
wobei die Verarbeitungsschaltung (2) durch Veränderung der Programmierung der freiprogrammierbaren Logikschaltung an einen Empfangs-Betrieb und einen Sende-Betrieb des Funkkommunikationssystems anpassbar ist,
wobei bei der Umschaltung vom Empfangs-Betrieb in den Sende-Betrieb und/oder vom Sende-Betrieb in den Empfangs-Betrieb durch Veränderung der Programmierung der freiprogrammierbaren Logikschaltung Funktionsblöcke (30 - 39, 50 - 59, 70 - 79, 90 - 99. 120 - 129, 150 - 159) des Funkkommunikationssystems aus der Logikschaltung exportiert und/oder in die Logikschaltung importiert werden,
wobei die Umprogrammierung der freiprogrammierbaren Logikschaltung in Teilbereichen erfolgt, und
wobei die nicht von der Umprogrammierung betroffenen Teilbereiche der freiprogrammierbaren Logikschaltung während der Umprogrammierung keiner Unterbrechung der Funktion unterliegen.

2. Funkkommunikationssystem nach Anspruch 1,
**dadurch gekennzeichnet,**
**dass** die Umprogrammierung der freiprogrammierbaren Logikschaltung ohne Unterbrechung der Funktion des Funkkommunikationssystems erfolgt.

3. Funkkommunikationssystem nach Anspruch 2,
**dadurch gekennzeichnet,**
**dass** die freiprogrammierbare Logikschaltung ein FPGA (11) ist.

4. Funkkommunikationssystem nach einem der Ansprüche 1 bis 3,
**dadurch gekennzeichnet,**
**dass** Teilbereiche (152 - 158) der freiprogrammierbaren Logikschaltung mehrfach von einzelnen Signalabschnitten (130, 160) durchlaufen werden,
**dass** die Programmierung der Teilbereiche (152 - 158) der freiprogrammierbaren Logikschaltung nach der Verarbeitung und Weiterleitung eines Signalabschnitts (130, 160) verändert wird.

5. Funkkommunikationssystem nach Anspruch 4,
**dadurch gekennzeichnet,**
**dass** die veränderten Teilbereiche (152 - 158) der freiprogrammierbaren Logikschaltung von dem Signalabschnitt (130, 160) erneut durchlaufen werden, und dass die Schritte Umprogrammierung und Signal-Verarbeitung in einem Teilbereich der freiprogrammierbaren Logikschaltung für einen Signalabschnitt (130, 160) beliebig oft wiederholbar sind.

6. Funkkommunikationssystem nach einem der Ansprüche 1 bis 5,
**dadurch gekennzeichnet,**
**dass** die freiprogrammierbare Logikschaltung bei der Verarbeitung unterschiedlicher Wellenformen eine unterschiedliche Programmierung aufweist, und
**dass** unterschiedliche Wellenformen durch unterschiedliche Modulationsverfahren und/oder Codierungsverfahren und/oder Verschlüsselungsverfahren und/oder Frequenzen und/oder Spektren und/oder Leistungen gegeben sind.

7. Funkkommunikationssystem nach Anspruch 4 oder 5, **dadurch gekennzeichnet,**
**dass** der letzte Signalabschnitt (80, 100), der vor einer Umprogrammierung zur Verarbeitung durch einen bestimmten Bereich (70 - 79) der freiprogrammierbaren Logikschaltung bestimmt ist, durch ein bestimmtes Signal angezeigt wird, dass Bereiche (70 - 73, 90 - 98) der freiprogrammierbaren Logikschaltung, welche diesen letzten Signalabschnitt bereits bearbeitet haben zur Umprogrammierung freigegeben werden, und
**dass** die Programmierung der freigegeben Bereiche (70 - 73, 90 - 98) der freiprogrammierbaren Logikschaltung verändert wird, während der letzte Signalabschnitt (80, 100) noch von anderen nicht veränderten Bereichen (74 - 79, 99) der freiprogrammierbaren Logikschaltung verarbeitet wird.

8. Verfahren zum Betrieb eines Funkkommunikationssystems mit einer Verarbeitungsschaltung (2),
wobei die Verarbeitung von Empfangs-Signalen und SendeSignalen durch die Verarbeitungsschaltung (2) durchgeführt wird,
wobei die Verarbeitung zumindest teilweise durch eine in der Verarbeitungsschaltung (2) enthaltene freiprogrammierbare Logikschaltung durchgeführt wird, wobei die Verarbeitungsschaltung (2) durch Veränderung der Programmierung der freiprogrammierbaren Logikschaltung an unterschiedliche Betriebszustände des Funkkommunikationssystems angepasst wird,
wobei bei der Umschaltung vom Empfangs-Betrieb in den Sende-Betrieb und/oder vom Sende-Betrieb in den Empfangs-Betrieb durch Veränderung der Programmierung der freiprogrammierbaren Logikschaltung Funktionsblöcke (30 - 39, 50 - 59, 70 - 79, 90 - 99. 120 - 129, 150 - 159) aus der Logikschaltung exportiert oder in die Logikschaltung importiert werden,
wobei die Umprogrammierung der freiprogrammierbaren Logikschaltung in Teilbereichen erfolgt, und
wobei die nicht von der Umprogrammierung betroffenen Teilbereiche der freiprogrammierbaren Logikschaltung während der Umprogrammierung keiner Unterbrechung der Funktion unterliegen.

9. Verfahren nach Anspruch 8,
**dadurch gekennzeichnet,**
**dass** die folgenden Schritte beim Betrieb des Funkkommunikationssystems bei der Umschaltung vom Empfangs-Betrieb in den Sende-Betrieb und/oder vom Sende-Betrieb in den Empfangs-Betrieb durchgeführt werden:
a. Verarbeitung von Signalen durch die freiprogrammierbare Logikschaltung im Sende-Betrieb bzw. Empfangs-Betrieb;
b. Veränderung der Programmierung der freiprogrammierbaren Logikschaltung;
c. Fortsetzung der Verarbeitung von Signalen durch die freiprogrammierbare Logikschaltung im Empfangs-Betrieb bzw. Sende-Betrieb.

10. Verfahren nach Anspruch 8 oder 9,
**dadurch gekennzeichnet,**
**dass** die Veränderung der Programmierung der freiprogrammierbaren Logikschaltung ohne Unterbrechung der Funktion des Funkkommunikationssystems erfolgt.

11. Verfahren nach Anspruch 10,
**dadurch gekennzeichnet,**
**dass** die freiprogrammierbare Logikschaltung ein FPGA (11) ist.

12. Verfahren nach einem der Ansprüche 8 bis 11,
**dadurch gekennzeichnet,**
**dass** zur Umprogrammierung der freiprogrammierbaren Logikschaltung die folgenden Schritte durchgeführt werden:
a. Verarbeitung von Signalen durch die freiprogrammierbare Logikschaltung;
b. Änderung des Betriebszustands des Funkkommunikationssystems;
c. Veränderung der Programmierung nicht genutzter Teilbereiche der freiprogrammierbaren Logikschaltung;
d. Fortsetzung der Verarbeitung von Signalen durch die freiprogrammierbare Logikschaltung;
e. Wiederholung der Schritte c. und d. bis die Programmierung der freiprogrammierbaren Logikschaltung vollständig an den neuen Betriebszustand angepasst ist.

13. Verfahren nach einem der Ansprüche 8 bis 12,
**dadurch gekennzeichnet,**
**dass** Teilbereiche (152 - 158) der freiprogrammierbaren Logikschaltung mehrfach von einzelnen Signalabschnitten (130, 160) durchlaufen werden,
**dass** die Programmierung der Teilbereiche (152 - 158) der freiprogrammierbaren Logikschaltung nach der Verarbeitung und Weiterleitung eines Signalabschnitts (130, 160) verändert wird.

14. Verfahren nach Anspruch 13,
**dadurch gekennzeichnet,**
**dass** die veränderten Teilbereiche (152 - 158) der freiprogrammierbaren Logikschaltung von dem Signalabschnitt (130, 160) erneut durchlaufen werden, dass die Schritte Umprogrammierung und Signal-Verarbeitung in einem Teilbereich der freiprogrammierbaren Logikschaltung für einen Signalabschnitt (130, 160) beliebig oft wiederholt werden kann.

15. Verfahren nach Anspruch 14,
**dadurch gekennzeichnet,**
**dass** zum wiederholten Durchlaufen einzelner Teilbereiche der freiprogrammierbaren Logikschaltung durch Signalabschnitte (130, 160) die folgenden Schritte durchgeführt werden:
a. Verarbeitung der Signalabschnitte (130, 160) durch Funktionsblöcke auf ersten Teilbereichen der freiprogrammierbaren Logikschaltung;
b. Verarbeitung der Signalabschnitte (130, 160) durch Funktionsblöcke auf zweiten Teilbereichen der freiprogrammierbaren Logikschaltung;
c. Veränderung der Funktionsblöcke der ersten Teilbereiche der freiprogrammierbaren Logikschaltung;
d. Verarbeitung der Signalabschnitte (130, 160) durch Funktionsblöcke auf ersten Teilbereichen der freiprogrammierbaren Logikschaltung;
e. Veränderung der Funktionsblöcke der zweiten Teilbereiche der freiprogrammierbaren Logikschaltung;
f. Wiederholung der Schritte b. bis e. bis die Verarbeitung der Signalabschnitte abgeschlossen ist.

16. Verfahren nach einem der Ansprüche 8 bis 15,
**dadurch gekennzeichnet,**
**dass** die freiprogrammierbaren Logikschaltung bei der Verarbeitung unterschiedlicher Wellenformen unterschiedlich programmiert wird, und
**dass** unterschiedliche Wellenformen durch unterschiedliche Modulationsverfahren und/oder Codierungsverfahren und/oder Verschlüsselungsverfahren und/oder Frequenzen und/oder Spektren und/oder Leistungen realisiert werden.

17. Verfahren nach Anspruch 14 oder 15,
**dadurch gekennzeichnet,**
**dass** der letzte Signalabschnitt (80, 100), der zur Verarbeitung durch einen bestimmten Bereich (70 - 79) der freiprogrammierbaren Logikschaltung bestimmt ist, vor einer Veränderung der Programmierung durch ein bestimmtes Signal angezeigt wird,
**dass** Bereiche (70 - 73, 90 - 98) der freiprogrammierbaren Logikschaltung, welche diesen letzten Signalabschnitt bereits bearbeitet haben, zur Umprogrammierung freigegeben werden, und
**dass** die Programmierung der freigegeben Bereiche (70 - 73, 90 - 98) der freiprogrammierbaren Logikschaltung verändert wird, während der letzte Signalabschnitt noch von anderen nicht veränderten Bereichen (74 - 79, 99) der freiprogrammierbaren Logikschaltung verarbeitet wird.

## Claims

1. A radio communications system with a processing circuit (2),
wherein the processing circuit (2) processes received signals and transmitted signals,
wherein the processing circuit (2) contains a freely-programmable logic circuit,
wherein the processing circuit (2) can be adapted to a reception mode and a transmission mode of the radio communications system by changing the programming of the freely-programmable logic circuit,
wherein, in the case of the switchover from the reception mode to the transmission mode and/or from the transmission mode to the reception mode, functional blocks (30 - 39, 50 - 59, 70 - 79, 90 - 99. 120 - 129, 150 - 159) of the radio communications system are exported from the logic circuit and/or imported to the logic circuit by changing the programming of the freely-programmable logic circuit,
wherein the reprogramming of the freely-programmable logic circuit is implemented in sub-regions, and
wherein the sub-regions of the freely-programmable logic circuit not affected by the reprogramming are not subject to an interruption of function during the reprogramming.

2. The radio communications system according to claim 1,
**characterised in that**
the reprogramming of the freely-programmable logic circuit is implemented without interrupting the function of the radio communications system.

3. The radio communications system according to claim 2,
**characterised in that**
the freely-programmable logic circuit is an FPGA (11).

4. The radio communications system according to any one of claims 1 to 3,
**characterised in that**
the sub-regions (152 - 158) of the freely-programmable logic circuit are run through several times by individual signal portions (130, 160), that the programming of the sub-regions (152 - 158) of the freely-programmable logic circuit is changed after the processing and routing of a signal portion (130, 160).

5. The radio communications system according to claim 4,
**characterised in that**
the changed sub-regions (152 - 158) of the freely-programmable logic circuit are run through again by the signal portion (130, 160), and
that the steps of reprogramming and signal processing within a sub-region of the freely-programmable logic circuit can be repeated as frequently as required for a signal portion (130, 160).

6. The radio communications system according to any one of claims 1 to 5,
**characterised in that**
the freely-programmable logic circuit provides a different programming for the processing of different wave forms, and
that different wave forms are provided by different modulation methods and/or coding methods and/or encrypting methods and/or frequencies and/or spectra and/or powers.

7. The radio communications system according to claim 4 or 5,
**characterised in that**
the last signal portion (80, 100) which is determined before a reprogramming for processing through a given region (70 - 79) of the freely-programmable logic circuit is displayed by a given signal,
that regions (70 - 73, 90 - 98) of the freely-programmable logic circuit, which have already processed this last signal portion are released for the reprogramming, and
that the programming of the released regions (70 - 73, 90 - 98) of the freely-programmable logic circuit is changed, while the last signal portion (80, 100) is still being processed by other unchanged regions (74 - 79, 99) of the freely-programmable logic circuit.

8. A method for the operation of a radio communications system with a processing circuit (2),
wherein the processing of received signals and transmitted signals is implemented by the processing circuit (2),
wherein the processing is implemented at least in part by a freely-programmable logic circuit contained within the processing circuit (2), wherein the processing circuit (2) is adapted to different operating conditions of the radio communications system by changing the programming of the freely-programmable logic circuit, wherein, in the case of the switchover from the reception mode to the transmission mode and/or from the transmission mode to the reception mode, functional blocks (30 - 39, 50 - 59, 70 - 79, 90 - 99. 120 - 129, 150 - 159) are exported from the logic circuit or imported into the logic circuit by changing the programming of the freely-programmable logic circuit,
wherein the reprogramming of the freely-programmable logic circuit is implemented in sub-regions, and
wherein the sub-regions of the freely-programmable logic circuit not affected by the reprogramming are not subject to an interruption of function during the reprogramming.

9. The method according to claim 8, **characterised in that**
the following steps in the operation of the radio communications system are implemented in the switchover from the reception mode to the transmission mode and/or from the transmission mode to the reception mode:
a. processing of signals by the freely-programmable logic circuit in the transmission mode or respectively reception mode;
b. changing of the programming of the freely-programmable logic circuit;
c. continuation of the processing of signals by the freely-programmable logic circuit in the reception mode or respectively the transmission mode.

10. The method according to claim 8 or 9, **characterised in that**
the change in the programming of the freely-programmable logic circuit is implemented without interrupting the function of the radio communications system.

11. The method according to claim 10,
**characterised in that**
the freely-programmable logic circuit is an FPGA (11).

12. The method according to any one of claims 8 to 11, **characterised in that**
the following steps are implemented for the reprogramming of the freely-programmable logic circuit:
a. processing of signals by the freely-programmable logic circuit;
b. switching of the operating state of the radio communications system;
c. changing of the programming of unused sub-regions of the freely-programmable logic circuit;
d. continuation of processing of signals by the freely-programmable logic circuit;
e. repetition of steps c. and d. until the programming of the freely-programmable logic circuit is completely adapted to the new operating state.

13. The method according to any one of claims 8 to 12, **characterised in that**
the sub-regions (152 - 158) of the freely-programmable logic circuit are run through several times by individual signal portions (130, 160), that the programming of the sub-regions (152 - 158) of the freely-programmable logic circuit is changed after the processing and routing of a signal portion (130, 160).

14. The method according to claim 13,
**characterised in that**
the changed sub-regions (152 - 158) of the freely-programmable logic circuit are run through again by the signal portion (130, 160),
that the steps of reprogramming and signal processing within a sub-region of the freely-programmable logic circuit can be repeated as frequently as required for a signal portion (130, 160).

15. The method according to claim 14,
**characterised in that**
the following steps are implemented for the repeated running through of individual sub-regions of the freely-programmable logic circuit by signal portions (130, 160):
a. processing of the signal portions (130, 160) by functional blocks on first sub-regions of the freely-programmable logic circuit;
b. processing of the signal portions (130, 160) by functional blocks on second sub-regions of the freely-programmable logic circuit;
c. changing of the functional blocks of the first sub-regions of the freely-programmable logic circuit;
d. processing of the signal portions (130, 160) by functional blocks on first sub-regions of the freely-programmable logic circuit;
e. changing of the functional blocks of the second sub-regions of the freely-programmable logic circuit;
f. repetition of steps b. to e. until the processing of the signal portions is completed.

16. The method according to any one of claims 8 to 15, **characterised in that**
the freely-programmable logic circuit is programmed differently in the processing of different waveforms,
and that different waveforms are realised by different modulation methods, and/or coding methods and/or encrypting methods and/or frequencies and/or spectra and/or powers.

17. The method according to claim 14 or 15, **characterised in that**
the last signal portion (80, 100), which is determined for processing by a given region (70 - 79) of the freely-programmable logic circuit, is displayed by a given signal before a change of the programming,
that regions (70 - 73, 90 - 98) of the freely-programmable logic circuit, which have already processed this last signal portion, are released for reprogramming, and
that the programming of the released regions (70 - 73, 90 - 98) of the freely-programmable logic circuit is changed, while the last signal portion is still being processed by other unchanged regions (74 - 79, 99) of the freely-programmable logic circuit.

## Revendications

1. Système de radiocommunications comportant un circuit de traitement (2),
dans lequel le circuit de traitement (2) traite des signaux de réception et des signaux d'émission,
dans lequel le circuit de traitement (2) comporte un circuit logique librement programmable,
dans lequel le circuit de traitement (2) est adaptable à un fonctionnement de réception et à un fonctionnement d'émission du système de radiocommunications grâce à la reprogrammation du circuit logique librement programmable,
dans lequel, lors de la commutation de la fonction de réception dans la fonction d'émission et/ou de la fonction d'émission dans la fonction de réception grâce à la reprogrammation du circuit logique librement programmable, des blocs de fonctions (30-39, 50-59, 70-79, 90-99. 120-129, 150-159) du système de radiocommunications sont exportés hors du circuit logique et/ou importés dans le circuit logique,
dans lequel la reprogrammation du circuit logique librement programmable est effectuée dans des régions partielles, et dans lequel les régions partielles du circuit logique librement programmable non concernées par la reprogrammation ne souffrent d'aucune interruption de fonction pendant la reprogrammation.

2. Système de radiocommunications selon la revendication 1, **caractérisé en ce que**
la reprogrammation du circuit logique librement programmable est effectuée sans interruption de fonction du système de radiocommunications.

3. Système de radiocommunications selon la revendication 2, **caractérisé en ce que**
le circuit logique librement programmable est un FPGA (11).

4. Système de radiocommunications selon l'une des revendications 1 à 3, **caractérisé en ce que**
les zones partielles (152-158) du circuit logique librement programmable sont parcourues plusieurs fois par différentes parties de signaux (130, 160),
**en ce que** la programmation des zones partielles (152-158) du circuit logique librement programmable est modifiée après le traitement et la transmission d'une partie de signal (130, 160).

5. Système de radiocommunications selon la revendication 4, **caractérisé en ce que**
les zones partielles modifiées (152-158) du circuit logique librement programmable sont de nouveau parcourues par la partie de signal (130, 160), et
**en ce que** les étapes de la reprogrammation et du traitement de signal dans une zone partielle du circuit logique librement programmable peuvent être répétées aussi souvent que désiré pour une partie de signal (130, 160).

6. Système de radiocommunications selon l'une des revendications 1 à 5, **caractérisé en ce que**
le circuit logique librement programmable présente une programmation différente lors du traitement de formes d'onde différentes, et
**en ce que** les formes d'onde différentes sont transmises par différents procédés de modulation et/ou procédés de codage et/ou procédés de décryptage et/ou fréquences et/ou spectres et/ou puissances.

7. Système de radiocommunications selon la revendication 4 ou 5, **caractérisé en ce que**
la dernière partie de signal (80, 100), qui est déterminée avant une reprogrammation en vue du traitement par une région déterminée (70-79) du circuit logique librement programmable, est annoncée par un signal déterminé,
**en ce que** les régions (70-73, 90-98) du circuit logique librement programmable, qui ont déjà traité cette dernière partie de signal, sont saisies en vue de la reprogrammation, et
**en ce que** la programmation des régions saisies (70-73, 90-98) du circuit logique librement programmable est modifiée, tandis que la dernière partie de signal (80, 100) est traitée par d'autres régions non modifiées (74-79, 99) du circuit logique librement programmable.

8. Procédé en vue du fonctionnement d'un système de radiocommunications comportant un circuit de traitement (2),
dans lequel le traitement des signaux de réception et des signaux d'émission est effectué par le circuit de traitement (2),
dans lequel le traitement est effectué au moins partiellement par un circuit logique librement programmable contenu dans le circuit de traitement (2),
dans lequel le circuit de traitement (2) est adapté aux états de fonctionnement différents du système de radiocommunications grâce à la reprogrammation du circuit logique librement programmable,
dans lequel, lors de la commutation de la fonction de réception dans la fonction d'émission et/ou de la fonction d'émission dans la fonction de réception grâce à la reprogrammation du circuit logique librement programmable, des blocs de fonctions (30-39, 50-59, 70-79, 90-99. 120-129, 150-159) sont exportés hors du circuit logique ou importé dans le circuit logique,
dans lequel la reprogrammation du circuit logique librement programmable est effectuée dans des zones partielles, et
dans lequel les régions partielles du circuit logique librement programmable non concernées par la reprogrammation ne souffrent d'aucune interruption de fonction pendant la reprogrammation.

9. Procédé selon la revendication 8, **caractérisé en ce que**
les étapes suivantes sont effectuées lors du fonctionnement du système de radiocommunications lors de la commutation de la fonction de réception dans la fonction d'émission et/ou de la fonction d'émission dans la fonction de réception :
a. Traitement des signaux par le circuit logique librement programmable dans la fonction d'émission ou dans la fonction de réception ;
b. Modification de la programmation du circuit logique librement programmable ;
c. Poursuite du traitement des signaux par le circuit logique librement programmable dans la fonction de réception ou dans la fonction d'émission.

10. Procédé selon la revendication 8 ou 9, **caractérisé en ce que**
la modification de la programmation du circuit logique librement programmable est effectuée sans interruption de fonction du système de radiocommunications.

11. Procédé selon la revendication 10, **caractérisé en ce que**
le circuit logique librement programmable, est un FPGA (11).

12. Procédé selon l'une des revendications 8 à 11, **caractérisé en ce que**
en vue de la reprogrammation du circuit logique librement programmable, les étapes suivantes sont effectuées:
a. Traitement des signaux par le circuit logique librement programmable ;
b. Modification de l'état de fonctionnement du circuit de radiocommunications ;
c. Modification de la programmation des régions partielles non utilisées du circuit logique librement programmable ;
d. Poursuite du traitement des signaux par le circuit logique librement programmable ;
e. Répétition des étapes c. et d. jusqu'à ce que la programmation du circuit logique librement programmable soit complètement adaptée au nouvel état de fonctionnement.

13. Procédé selon l'une des revendications 8 à 12, **caractérisé en ce que**
les régions partielles (152-158) du circuit logique librement programmable sont parcourues plusieurs fois par des parties de signaux différentes (130, 160),
**en ce que** la programmation des régions partielles (152-158) du circuit logique librement programmable est modifiée après le traitement et la transmission d'une partie de signal (130, 160).

14. Procédé selon la revendication 13, **caractérisé en ce que**
les zones partielles modifiées (152-158) du circuit logique librement programmable sont de nouveau parcourues par la partie de signal (130, 160),
**en ce que** les étapes de la reprogrammation et du traitement de signal peuvent être répétées aussi souvent que désiré dans une région partielle du circuit logique librement programmable pour une partie de signal (130, 160).

15. Procédé selon la revendication 14, **caractérisé en ce que**
en vue du parcours répété des différentes régions partielles du circuit logique librement programmable par les parties de signaux (130, 160), les étapes suivantes sont effectuée :
a. Traitement des parties de signaux (130, 160) par les blocs de fonction sur les premières régions partielles du circuit logique librement programmable ;
b. Traitement des parties de signaux (130, 160) par les blocs de fonction sur les secondes régions partielles du circuit logique librement programmable ;
c. Modification des blocs de fonction des premières zones partielles du circuit logique librement programmable ;
d. Traitement des parties de signaux (130, 160) par les blocs de fonction sur les premières régions partielles du circuit logique librement programmable ;
e. Modification des blocs de fonction des secondes régions partielles du circuit logique librement programmable ;
f. Répétition des étapes b. à e. jusqu'à ce que le traitement des parties de signaux soit terminé.

16. Procédé selon l'une des revendications 8 à 15, **caractérisé en ce que**
le circuit logique librement programmable est différemment programmé lors du traitement de différentes formes d'ondes, et
**en ce que** les différentes formes d'ondes sont réalisées par différents procédés de modulation et/ou procédés de codage et/ou procédés de décryptage et/ou fréquences et/ou spectres et/ou puissances.

17. Procédé selon la revendication 14 ou 15, **caractérisé en ce que**
la première partie de signal (80, 100), qui est déterminée pour le traitement par une première région déterminée (70-79) du circuit logique librement programmable, est annoncée avant une modification de la programmation par un signal déterminé,
**en ce que** les régions (70-73, 90-98) du circuit logique librement programmable, qui ont déjà traité cette dernière partie de signal, sont saisies pour une reprogrammation, et
**en ce que** la programmation des régions saisies (70-73, 90-90) du circuit logique librement programmable est modifiée, tandis que la dernière partie de signal est encore traitée par d'autres régions non modifiées (74-79, 99) du circuit logique librement programmable.
